# FASCICULE DE BREVET EUROPEEN

(11) **EP 3 124 856 B1**
(45) Date de publication et mention de la délivrance du brevet: **19.07.2023**
(21) Numéro de dépôt: 16182144.2
(22) Date de dépôt: 01.08.2016
(51) Int. Cl.: F21S 41/147, F21S 41/33, B60Q 1/18, F21S 43/237, F21S 43/245, F21S 43/247

(54) **DISPOSITIF D'ÉCLAIRAGE POUR VÉHICULE AUTOMOBILE**
BELEUCHTUNGSVORRICHTUNG FÜR KRAFTFAHRZEUG
LIGHTING DEVICE FOR A MOTOR VEHICLE

(30) Priorité: 31.07.2015 FR 1557443
(43) Date de publication de la demande: 01.02.2017
(73) Titulaire: VALEO VISION, 93012 Bobigny Cedex (FR)
(72) Inventeur: THABET, Ziyed, 93012 - BOBIGNY CEDEX (FR); DE LAMBERTERIE, Antoine, 75019 PARIS (FR)
(74) Mandataire: Valeo Visibility

(56) Documents cités:
- EP-A1- 1 857 732
- EP-A1- 2 453 167
- EP-A1- 2 770 249
- EP-A2- 2 407 709
- WO-A1-2015/063023
- DE-A1-102006 027 970
- DE-A1-102010 056 312
- DE-A1-102011 011 462
- DE-A1-102012 101 919
- FR-A1- 2 813 654
- JP-A- 2009 081 087
- JP-A- 2012 204 030
- JP-A- 2014 056 769

## Description

L'invention concerne un dispositif d'éclairage pour véhicule automobile. L'invention concerne plus particulièrement un dispositif d'éclairage pour véhicule automobile comprenant au moins une première source de lumière, au moins une deuxième source de lumière et au moins un réflecteur de lumière.

Un véhicule automobile contemporain est équipé d'au moins un projecteur avant comprenant au moins un feu dit de route et au moins un feu dit de circulation ou signalisation diurne. Plus particulièrement, une voiture est généralement équipée de deux projecteurs avant, l'un à gauche et l'autre à droite, qui sont des images miroir l'un de l'autre (par rapport à un plan de coupe longitudinal et vertical de la voiture).

Généralement, chacun des feux de route et de circulation diurne utilise un réflecteur qui lui est propre. Dans ce cas, il est donc nécessaire de fabriquer un réflecteur par feu. En outre, un tel agencement ne permet pas de définir une signature lumineuse distinctive et reconnaissable de nuit comme de jour, signature qui permettrait d'identifier le modèle et/ou la marque du véhicule en toutes circonstances.

Par ailleurs, il est connu, du document DE 10 2010 056312, un dispositif d'éclairage qui permet de générer deux distributions de lumière différentes à l'aide d'un même réflecteur. Le réflecteur comprend une succession de deux types de facettes réfléchissantes ; le premier type de facettes réfléchit principalement la lumière émise par la première source de lumière, et réfléchit de façon secondaire la lumière émise par la deuxième source de lumière ; et le second type de facettes réfléchit principalement la lumière émise par la deuxième source de lumière, et réfléchit de façon secondaire la lumière émise par la première source de lumière. Du fait de l'alternance des deux types de facettes, et de la réflexion par des facettes successives de la lumière émise par les deux sources de lumière, ce dispositif d'éclairage n'est pas applicable à la réalisation d'une fonction de feu de route dont l'intensité lumineuse est nécessairement forte. Par exemple, en France, la réglementation en vigueur impose une intensité lumineuse minimale, qui est actuellement de 43750 Cd, au centre d'une distribution lumineuse de feu de route.

Le dispositif d'éclairage selon le document DE 10 2010 056312 présente également l'inconvénient qu'il n'est pas non plus applicable à la réalisation de deux distributions lumineuses dont les intensités sont très différentes l'une de l'autre, telles qu'une distribution lumineuse de feu de route et une distribution lumineuse de feu de signalisation diurne. Par exemple, en France, la réglementation en vigueur impose une intensité lumineuse maximale, qui est actuellement de 1200 Cd, au centre d'une distribution lumineuse de signalisation diurne, soit une intensité lumineuse environ trente fois moins élevée que la valeur de l'intensité de la distribution lumineuse de feu de route. DE 10 2012 101919 A1 et DE 10 2006 027970 A1 décrivent des dispositifs d'éclairage connus.

Le but de la présente invention est de remédier à au moins un de ces inconvénients. Par ailleurs, d'autres avantages de l'invention apparaîtront encore à la lecture de ce qui suit.

A cet effet, le dispositif d'éclairage pour véhicule automobile selon l'invention comprend au moins une première source et au moins une deuxième source de lumière agencées conjointement avec un réflecteur, et comprend en outre au moins un guide de lumière agencé conjointement avec au moins une troisième source de lumière, de sorte que le dispositif d'éclairage est apte à générer :
- une distribution de lumière d'au moins un feu de signalisation diurne, lorsque la lumière émise par ladite au moins une première source de lumière est réfléchie par le réflecteur et lorsque la lumière émise par ladite au moins une troisième source de lumière est transmise par ledit au moins un guide de lumière, et
- une distribution de lumière d'au moins un feu de route, lorsque la lumière émise par ladite au moins une deuxième source de lumière est réfléchie par le réflecteur.

Grâce au dispositif d'éclairage selon l'invention, le même réflecteur réfléchit la lumière de jour, en configuration de feu de signalisation diurne, et de nuit, en configuration de feu de route. En outre, ledit au moins un guide de lumière contribue à remplir la fonction de signalisation diurne. La signature lumineuse atteinte est dès lors avantageusement distinctive et reconnaissable de jour, comme de nuit, pour permettre l'identification du modèle et/ou de la marque du véhicule en toutes circonstances.

Selon une particularité, ledit au moins un guide de lumière peut être agencé de sorte que la lumière émise par ladite au moins une troisième source génère une première partie de la distribution de lumière du feu de signalisation diurne, et le réflecteur est agencé de sorte que la lumière émise par ladite au moins une première source génère une seconde partie de la distribution de lumière du feu de signalisation diurne, les première et seconde parties de la distribution de lumière se recouvrant au plus de façon partielle.

Plus particulièrement :
- ladite première partie de la distribution de lumière du feu de signalisation diurne peut s'étendre de part et d'autre d'un axe de projection horizontal du dispositif d'éclairage et ladite seconde partie de la distribution de lumière du feu de signalisation diurne peut s'étendre au-dessous de l'axe de projection horizontal, et/ou
- ladite première partie de la distribution de lumière du feu de signalisation diurne peut présenter des courbes isophotes resserrées à mesure que ladite première partie s'étend au-dessous de l'axe de projection horizontal, permettant ainsi que la première partie de la distribution de lumière du feu de signalisation diurne soit plus intense à mesure que l'on se rapproche de l'axe de projection et/ou
- ladite première partie de la distribution de lumière du feu de signalisation diurne peut s'étendre, sur un axe de projection vertical V, d'environ 6° au-dessous de l'axe de projection horizontal H jusqu'à environ 20° au-dessus de l'axe de projection horizontal, préférentiellement d'environ 3° au-dessous de l'axe de projection horizontal jusqu'à environ 15° au-dessus de l'axe de projection horizontal.

Par « axe de projection horizontal du dispositif d'éclairage », il est entendu un axe parallèle à l'horizon, perpendiculaire à l'axe optique du dispositif d'éclairage et situé à hauteur de l'axe optique du dispositif d'éclairage, lorsque le dispositif d'éclairage équipe un véhicule automobile.

Le dispositif d'éclairage offre ainsi la possibilité de créer un compromis entre la contribution lumineuse au feu de circulation diurne liée à la réflexion de la lumière émise par la première source et réfléchie par le réflecteur et la contribution lumineuse au feu de circulation diurne liée à la transmission par ledit au moins un guide de la lumière émise par la troisième source.

Selon un aspect de l'invention, le dispositif d'éclairage est agencé pour que la contribution lumineuse au feu de circulation diurne liée à la transmission par le guide de la lumière émise par la troisième source soit plus importante que la contribution lumineuse au feu de circulation diurne liée à la réflexion de la lumière émise par la première source et réfléchie par le réflecteur.

Le dispositif d'éclairage offre ainsi la possibilité de répartir les contributions de chacune des première et troisième sources selon différentes configurations spatiales. Plus particulièrement, il est ainsi avantageusement possible de créer une distribution lumineuse dont la deuxième partie apparaît relativement effacée par rapport à la première partie. La deuxième partie de la distribution lumineuse peut ne pas apparaître dans la majorité des directions d'observations et seule la première partie de la distribution lumineuse apparaît dans la majorité des directions d'observations.

En variant la répartition spatiale des contributions et/ou en variant les puissances respectives des sources de lumière mises en oeuvre, la lumière transmise via ledit au moins un guide de lumière peut être ainsi distinguée visuellement de la lumière réfléchie par le réflecteur. La lumière transmise via ledit au moins un guide de lumière est préférentiellement orientée vers le dessus de l'axe de projection horizontal pour être mieux distinguée et contribuer fortement à la définition d'une signature lumineuse distinctive et reconnaissable, notamment pour permettre l'identification du modèle et/ou de la marque du véhicule. Pour autant, le réflecteur servant à la fois à la fonction de signalisation diurne et à la fonction d'éclairage en feu de route, il contribue à la définition d'une signature distinctive et reconnaissable de jour comme de nuit.

Selon d'autres particularités :
- ledit au moins un guide de lumière peut s'étendre principalement selon un axe longitudinal sensiblement parallèle à l'axe de projection horizontal H du dispositif d'éclairage, et/ou
- ledit au moins un guide de lumière peut s'étendre, au-delà du réflecteur de lumière, sensiblement sur toute une longueur du dispositif d'éclairage, et/ou
- chaque guide de lumière peut présenter une face dite avant, d'où la lumière émise par ladite au moins une troisième source de lumière est transmise hors du guide de lumière, et la face avant de chaque guide de lumière peut présenter une surface comprise entre 14 et 26 cm² et/ou présenter une courbure d'un rayon déterminé pour contrôler une déviation de la lumière transmise hors du guide de lumière.

Selon un mode de réalisation, ledit au moins un guide de lumière comprend au moins :
- une partie de corps constituée d'au moins un matériau transparent et s'étendant principalement selon un axe longitudinal, la partie de corps comprenant au moins une face transversale d'extrémité en regard de laquelle est agencée ladite au moins une troisième source de lumière, de sorte que la lumière émise par ladite au moins une troisième source soit reçue et se propage dans la partie de corps au moins par réflexions totales sur des faces longitudinales de la partie de corps, et
- un élément de découplage constitué d'au moins un matériau réfléchissant et recouvrant partiellement une face dite arrière de ladite partie de corps, la face arrière étant opposée à une face dite avant de la partie de corps par laquelle la lumière se propageant dans la partie de corps est émise hors dudit au moins un guide de lumière après réflexion sur l'élément de découplage.

Plus particulièrement, l'élément de découplage peut recouvrir une portion de la face arrière de la partie de corps, cette portion ayant une largeur inférieure à une largeur de la face arrière et/ou cette portion étant essentiellement comprise dans une demi-hauteur de la face arrière.

Un contrôle de l'orientation de la lumière en sortie dudit au moins un guide de lumière est ainsi avantageusement obtenu.

Plusieurs agencements dudit au moins un guide de lumière par rapport au réflecteur sont possibles dont au moins les suivants :
- ledit au moins un guide de lumière ou un premier guide de lumière est disposé au-dessus du réflecteur, et l'élément de découplage recouvre une portion de la face arrière de la partie de corps, cette portion étant essentiellement comprise dans la demi-hauteur de la face arrière la plus proche du réflecteur, et/ou
- ledit au moins un guide de lumière ou un deuxième guide de lumière est disposé au-dessous du réflecteur, et l'élément de découplage recouvre une portion de la face arrière de la partie de corps, cette portion étant essentiellement comprise dans la demi-hauteur de la face arrière la plus éloignée du réflecteur.

L'orientation de la lumière en sortie dudit au moins un guide de lumière est ainsi avantageusement contrôlée comme étant dirigée vers le haut. Notamment, l'orientation de la lumière en sortie dudit au moins un guide de lumière peut être ainsi avantageusement contrôlée pour s'étendre, sur un axe de projection vertical V, d'environ 6° au-dessous de l'axe de projection horizontal H jusqu'à environ 20° au-dessus de l'axe de projection horizontal, préférentiellement d'environ 3° au-dessous de l'axe de projection horizontal jusqu'à environ 15° au-dessus de l'axe de projection horizontal.

Le guide de lumière est agencé pour diriger les rayons issus de la troisième source de lumière dans n'importe quelle direction souhaitée grâce à la forme spécifique de sa face avant et/ou grâce au positionnement de l'élément de découplage. En particulier, la forme spécifique de sa face avant et/ou le positionnement de l'élément de découplage peut permettre de former la première partie de la distribution de lumière de feu de signalisation diurne présentant des courbes isophotes resserrées à mesure que la première partie s'étend au-dessous de l'axe de projection horizontal. Pour réaliser une telle distribution lumineuse avec une autre source surfacique telle qu'une diode électroluminescente organique, il faut qu'elle ait une forme spécifique et un positionnement donné dans le dispositif d'éclairage. La forme et le positionnement de la source deviennent alors des contraintes supplémentaires par rapport à l'utilisation d'un guide de lumière pour la mise au point du dispositif d'éclairage. Par exemple, l'aspect visuel de la surface d'émission lumineuse de la diode électroluminescente organique est différent en raison de la forme incurvée de la diode électroluminescente organique.

De plus, l'association du guide de lumière avec la troisième source lumineuse permet d'atteindre des valeurs d'intensité lumineuse pour une surface donnée qui ne peuvent pas être atteintes par d'autres sources surfaciques comme une diode électroluminescente organique. Une diode électroluminescente organique produit au maximum une luminance égale à 1 cd/cm². Ainsi, pour une surface émettrice de lumière identique à celle du guide de lumière, c'est-à-dire comprise entre 14 cm² et 26 cm², la diode électroluminescente organique produit une intensité comprise entre 14 cd et 26 cd. Ces valeurs d'intensité sont bien trop basses pour permettre, par exemple, de contribuer à la réalisation d'un feu de signalisation diurne. En effet, on peut vouloir atteindre, dans certaines applications, des valeurs d'intensité comprises entre 400 cd et 500 cd.

Selon une particularité, le réflecteur peut comprendre un secteur central apte à focaliser la lumière émise par ladite au moins une première source de lumière et au moins un secteur périphérique apte à focaliser la lumière émise par ladite au moins une deuxième source de lumière.

Selon une variante, le réflecteur est configuré pour focaliser la lumière émise par ladite au moins une deuxième source de lumière et pour défocaliser la lumière émise par ladite au moins une première source de lumière.

La lumière est dite focalisée par le réflecteur lorsque sa source est placée au niveau du foyer du réflecteur ou d'au moins un secteur du réflecteur. La lumière est dite défocalisée par le réflecteur lorsque sa source est placée en dehors du foyer du réflecteur ou d'au moins un secteur du réflecteur.

Le dispositif d'éclairage selon l'invention est ainsi adaptable conjointement avec différents types de réflecteur, et notamment avec un réflecteur focalisant la lumière émise par ladite au moins une deuxième source et un réflecteur ne focalisant pas la lumière émise par ladite au moins une première source.

D'autres caractéristiques et avantages de l'invention apparaîtront encore à la lecture de la description qui va suivre. Celle-ci est purement illustrative et doit être lue en regard des dessins annexés sur lesquels :
- la figure 1 illustre une vue en perspective d'un dispositif d'éclairage selon la présente invention ;
- la figure 2 illustre schématiquement un diagramme de répartition lumineuse d'une signalisation diurne obtenue selon un mode de réalisation du dispositif d'éclairage selon l'invention ;
- les figures 3a et 3b illustrent chacune une vue en coupe transversale d'un guide de lumière du dispositif d'éclairage selon un mode de réalisation de l'invention ;
- les figures 4a et 4b illustrent une vue en perspective et une vue en coupe transversale d'un guide de lumière du dispositif d'éclairage selon un mode de réalisation de l'invention ;
- les figures 5a, 5b et 5c illustrent chacune une vue en coupe transversale d'un guide de lumière du dispositif d'éclairage selon un mode de réalisation de l'invention et en regard de chacune de ces vues en coupe la distribution de lumière obtenue ; et
- la figure 6 illustre un agencement des première et deuxième sources de lumière par rapport au réflecteur du dispositif d'éclairage selon un mode de réalisation de l'invention.

Dans la description ci-dessous, chaque composant du dispositif d'éclairage peut être décrit comme étant disposé «sur» ou «sous», « au-dessus » ou « au-dessous » d'un autre composant du dispositif d'éclairage Les termes 'inférieur' et 'supérieur', 'sous' et `sur', 'dessous' et 'dessus' , 'au-dessous' et 'au-dessus' utilisés ci-après sont considérés comme indiquant respectivement le côté du sol et le côté du ciel tel qu'observable lors d'un usage normal d'un véhicule automobile équipé du dispositif d'éclairage selon l'invention.

Les différents éléments du guide de lumière ci-dessous qualifiés de longitudinaux sont agencés selon l'axe d'extension principal du guide de lumière et les différents éléments du guide de lumière ci-dessous qualifiés de transversaux sont agencés selon un plan perpendiculaire à l'axe d'extension principal du guide de lumière.

### Dispositif d'éclairage

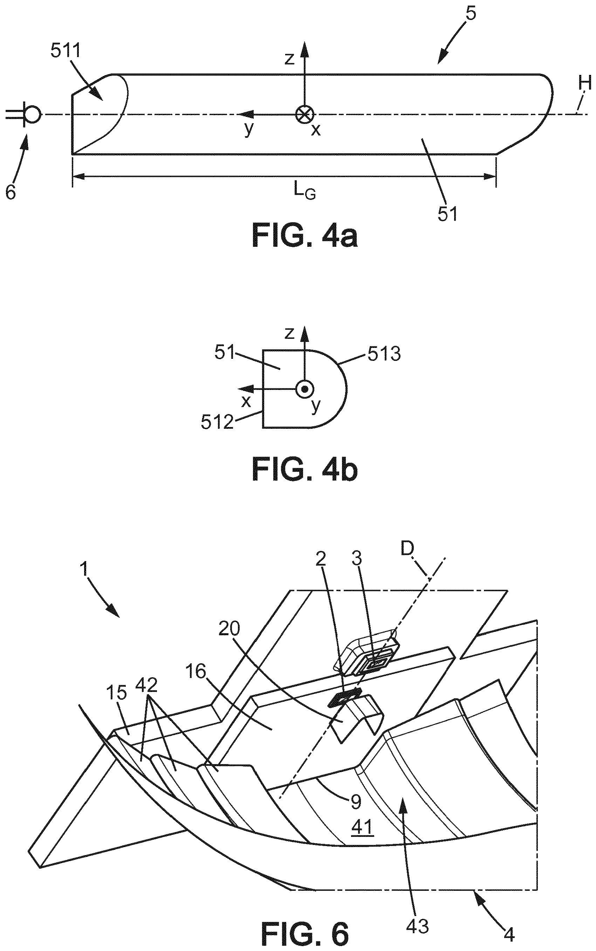

Comme visible sur la figure 6, le dispositif d'éclairage 1 selon la présente invention comprend au moins une première source 2 de lumière et au moins une deuxième source 3 de lumière. Ces deux sources sont agencées conjointement avec un réflecteur 4.

Comme illustré sur la figure 4a, le dispositif d'éclairage comprend en outre au moins une troisième source 6 de lumière agencée conjointement avec au moins un guide de lumière 5. Il est ici principalement envisagé d'agencer une troisième source de lumière 6 par guide de lumière 5, mais d'autres agencements sont envisageables : par exemple, chaque guide de lumière peut être agencé conjointement avec deux desdites troisièmes sources de lumière, ces dernières illuminant une même face du guide de lumière ou des faces différentes, par exemple opposées l'une à l'autre.

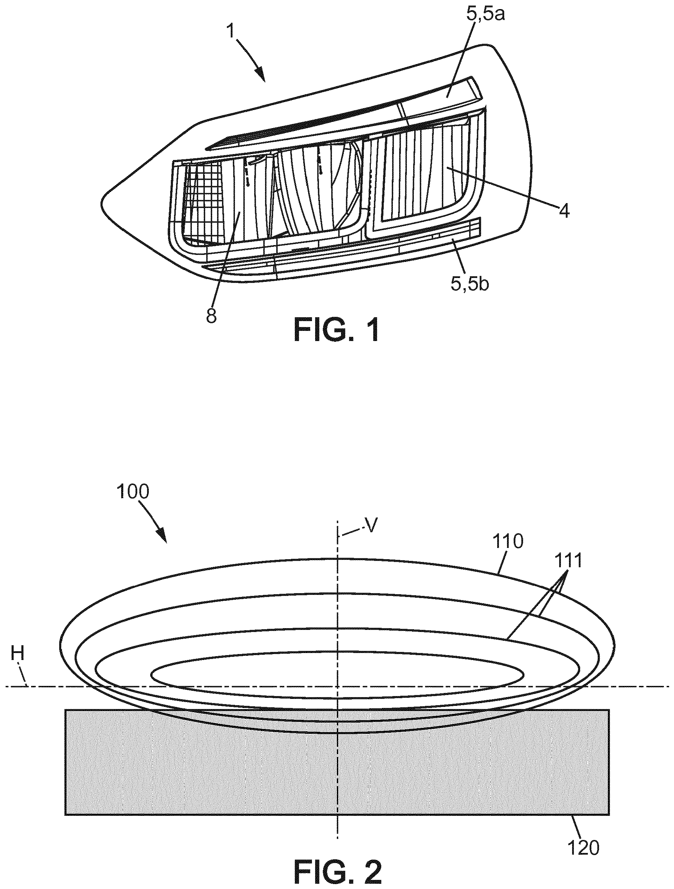

Le guide de lumière 5 et le réflecteur 4 sont par exemple agencés l'un par rapport à l'autre de la façon illustrée sur la figure 1. Plus particulièrement, le dispositif d'éclairage comprend le réflecteur 4 délimitant une première cavité, et deux guides de lumière 5a, 5b qui peuvent être disposés au-dessus et au-dessous de ladite première cavité, ou équivalemment du réflecteur 4. Toutefois, l'invention n'est pas limitée à cet agencement notamment au moins un guide de lumière 5 pourrait être disposé à gauche ou à droite du réflecteur 4.

Le dispositif d'éclairage selon l'invention peut comprendre également au moins une cavité 8 prévue pour accueillir au moins une source de lumière supplémentaire (non représentée) apte à générer une distribution lumineuse de feu de croisement.

Par exemple, chacun des guides de lumière 5 s'étend au-dessus ou au-dessous du réflecteur 4 jusqu'au-dessus ou au-dessous de la cavité 8 prévue pour le feu de croisement, respectivement. Plus généralement, chacun des guides de lumière 5 peut s'étendre d'un côté ou de l'autre du réflecteur 4. Cette caractéristique permet notamment de définir une signature lumineuse distinctive. Selon l'exemple illustré sur la figure 1, la signature lumineuse obtenue lorsque le réflecteur 4 réfléchit la lumière issue de la ou des premières sources 2 et lorsque les guides de lumières 5 transmettent la lumière issue de la ou des troisièmes sources 6 est en forme de C.

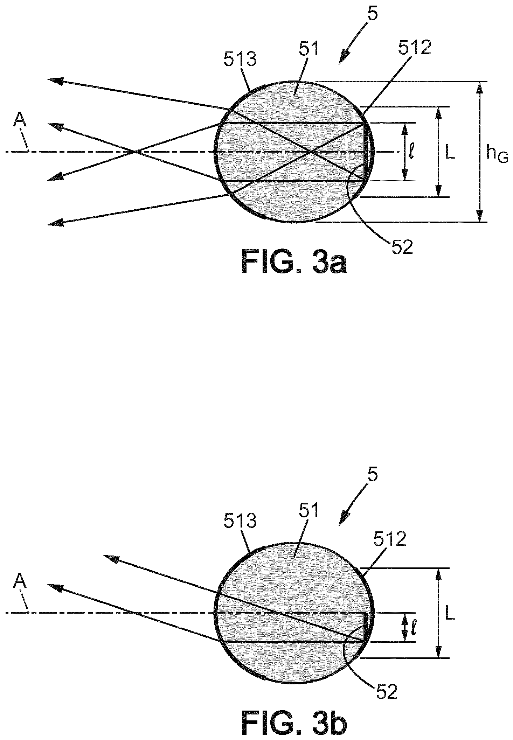

Comme particulièrement illustré sur les figures 3a et 3b, chaque guide de lumière 5 présente une face dite avant 513, d'où la lumière émise par la troisième source de lumière 6 est transmise hors du guide de lumière 5. La face avant 513 de chaque guide de lumière 5 peut présenter une surface comprise entre 14 et 26 cm². Plus particulièrement, la face avant 513 peut présenter une hauteur moyenne h_{G} comprise entre 0,5 cm et 4 cm, préférentiellement entre 1 cm et 2 cm, et s'étendre sur une longueur L_{G} (Cf. Fig. 4a) comprise entre 3 cm et 60 cm, préférentiellement entre 6 cm et 30 cm. En comparaison, la surface réfléchissante du réflecteur 4 peut être comprise entre 20 cm² et 60 cm², préférentiellement entre 30 cm² et 40 cm². La surface réfléchissante du réflecteur peut être environ deux fois plus grande que la surface de la face avant 513 d'un guide de lumière 5 du dispositif d'éclairage selon l'invention.

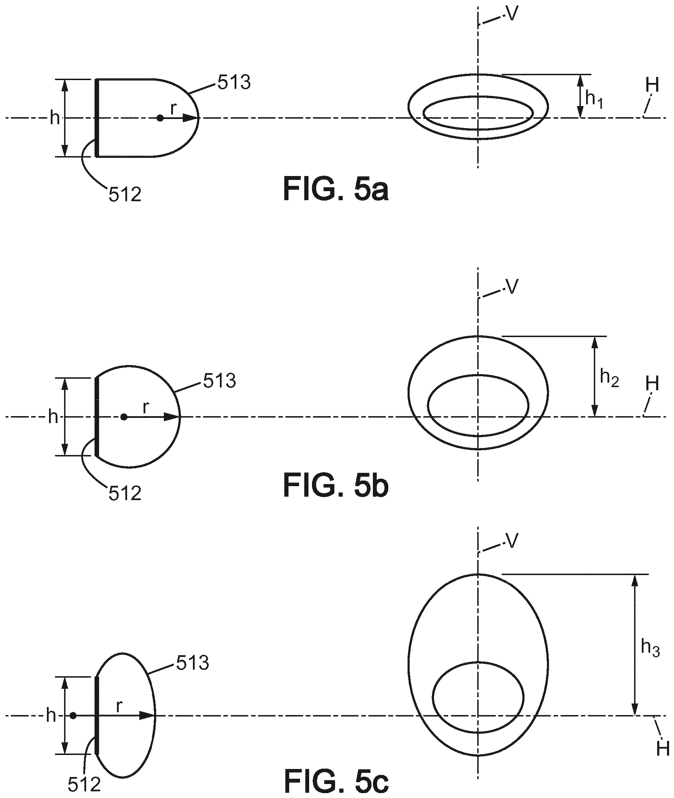

En outre, comme illustré sur les figures 5a, 5b et 5c, chaque face avant 513 d'un guide de lumière 5 peut présenter une courbure d'un rayon r déterminé. Plus le rayon de courbure de la face avant 513 est grand, plus la distribution lumineuse s'étend d'une hauteur h1, h2, h3 grande au-dessus de l'axe de projection horizontale H. En effet, le rayon de courbure de la face avant 513 contrôle la déviation de la lumière transmise hors du guide de lumière 5. On note que, dans ces exemples illustrés sur les figures 5a, 5b et 5c, la face arrière 512 du guide de lumière est localement plane et d'une hauteur h fixée constante.

Comme illustré sur la figure 4a, un guide de lumière 5 peut s'étendre principalement selon un axe longitudinal y sensiblement parallèle à l'axe de projection horizontal H du dispositif d'éclairage 1, notamment lorsque le dispositif d'éclairage équipe un véhicule automobile.

En comparant notamment les figures 3a et 3b avec les figures 4a et 4b, on s'aperçoit que la coupe transversale du guide de lumière 5 peut prendre différentes formes. Sur les figures 3a et 3b, la coupe transversale du guide de lumière est une coupe ovoïdale, tandis que, sur les figures 4a et 4b, la coupe transversale du guide de lumière présente une partie arrondie située au niveau de la face avant 513 du guide de lumière et une partie essentiellement rectangle comprenant la face arrière 512 de guide de lumière.

Plus particulièrement, le guide de lumière 5 peut comprendre une partie de corps 51 et un élément de découplage 52, ce dernier élément étant illustré aux figures 3a et 3b.

La partie de corps 51 est par exemple constituée d'au moins un matériau transparent, tel que le verre, le polycarbonate ou le polyméthacrylate de méthyle (souvent abrégé en PMMA, de l'anglais Polymethyl Méthacrylate). La partie de corps 51 peut comprendre au moins une face transversale 511 d'extrémité en regard de laquelle est agencée ladite au moins une troisième source de lumière 6. D'autres agencements de la troisième source de lumière par rapport à la partie de corps du guide de lumière sont envisageables. Ainsi, la lumière émise par ladite au moins une troisième source 6 est reçue et se propage dans la partie de corps 51 au moins par réflexions totales sur des faces longitudinales de la partie de corps ; avant d'en sortir la lumière rencontre un élément de découplage.

L'élément de découplage 52 peut être constitué d'au moins un matériau réfléchissant. L'élément de découplage 52 peut recouvrir partiellement une face dite arrière 512 de ladite partie de corps 51. La face arrière 512 est opposée à la face avant 513 de la partie de corps 51 par laquelle la lumière est émise hors du guide de lumière 5 après réflexion sur l'élément de découplage 52. Cet élément de découplage 52 peut par exemple consister en une métallisation d'une portion de la surface arrière 512 de la partie de corps 51.

L'élément de découplage 52 est préférentiellement structuré. Il présente des surfaces ou facettes réfléchissantes, par exemple échelonnées en marches d'escalier, pour permettre une collimation au moins partielle des rayons issus de la troisième source de lumière 6 et réfléchis par les facettes réfléchissantes de l'élément de découplage 52.

L'élément de découplage 52 recouvre une portion de la face arrière 512 de la partie de corps 51. Comme illustré sur les figures 3a et 3b, cette portion a une largeur *l* inférieure à une largeur L de la face arrière 512. Plus particulièrement, et comme illustré sur la figure 3b, cette portion est essentiellement comprise dans une demi-hauteur de la face arrière 512. Dès lors, lorsque le guide de lumière 5 est agencé dans le dispositif d'éclairage de sorte que la demi-hauteur soit située en bas, par exemple en dessous d'un axe ou plan optique A du guide de lumière, les rayons issus de la troisième source se trouvent alors naturellement émis vers le haut.

Dans l'exemple illustré sur la figure 1, le premier guide de lumière 5a est disposé au-dessus du réflecteur 4 ; et l'élément de découplage 52 recouvre une portion de la face arrière 512 de la partie de corps 51 qui est essentiellement comprise dans la demi-hauteur de la face arrière 512 la plus proche du réflecteur 4. De même, le deuxième guide de lumière 5b est disposé au-dessous du réflecteur 4 ; et l'élément de découplage 52 recouvre une portion de la face arrière 512 qui est essentiellement comprise dans la demi-hauteur de la face arrière 512 la plus éloignée du réflecteur 4. Ainsi, les deux guides de lumière 5a et 5b émettent de la lumière vers le haut.

Il est possible de viser une superposition significative des distributions de lumière issues des guides de lumière 5a, 5b. Cette superposition peut par exemple être réalisée en modifiant la structure ou l'emplacement de l'élément de découplage 52 sur la face arrière 512 de la partie de corps 51 d'un guide de lumière 5a à l'autre 5b. Par exemple, l'élément de découplage du deuxième guide de lumière 5b est placé plus bas par rapport à l'axe optique A que l'élément de découplage du premier guide de lumière 5a.

En variante, avec des guides de lumière 5a, 5b identiques entre eux, la superposition peut être réalisée par une inclinaison relative du deuxième guide de lumière 5b par rapport au premier guide de lumière 5a. Une telle inclinaison peut résulter d'une rotation d'un des guides de lumière autour de son axe longitudinal y dès lors que le guide est sensiblement de forme tubulaire. Les axes ou plans optiques A des guides de lumière 5a et 5b ne sont alors plus parallèles entre eux, mais l'axe ou plan optique du deuxième guide de lumière 5b forme, avec l'axe ou plan optique du premier guide de lumière 5a, un angle de l'ordre de quelques degrés au-dessus de l'axe de projection horizontale. On note que, dans cet exemple, une déviation vers le haut des rayons de lumière transmis via le guide de lumière peut être due à la seule inclinaison du guide de lumière. Dès lors, une déviation vers le haut des rayons de lumière transmise via le guide de lumière qui serait liée à une courbure de la face avant 513 du guide de lumière peut s'avérer superflue, et le guide de lumière peut présenter alors une face avant plane, et avantageusement une section de forme entièrement parallélépipédique.

De la même manière, une portion significative de la face arrière 512 de la partie de corps 51 de chaque guide de lumière 5 peut être recouverte d'un élément de découplage 52. Auquel cas, la lumière émise par chaque guide de lumière 5 n'est pas orientée naturellement vers le haut, mais cette orientation peut être forcée en inclinant l'axe optique A de chacun des guides de lumière vers le haut, par exemple en tournant le guide de lumière autour de son axe longitudinal *y*.

Comme illustré sur la figure 6, le réflecteur 4 peut comprendre une pluralité de secteurs réfléchissants 41 et 42. Il peut notamment comprendre un secteur central 41 et au moins un secteur périphérique 42, c'est-à-dire latéral et adjacent le secteur central 41. Comme visible sur la figure 6, le réflecteur 4 peut présenter une forme générale de paraboloïde, ou une forme générale d'une portion de paraboloïde. Plus particulièrement, le réflecteur 4 peut comprendre un secteur central 41 de part et d'autre duquel s'étendent plusieurs secteurs périphériques 42. Le secteur central 41 est par exemple d'une largeur, sensiblement égale à deux fois la largeur de chaque secteur périphérique 42.

Une surface de raccord 43 n'ayant préférentiellement pas de fonction optique peut être agencée entre le secteur central 41 et les secteurs périphériques 42 adjacents. Cette surface peut jouer un rôle dans le fait que le secteur central 41 et/ou les secteurs périphériques 42 focalisent ou non la lumière issue de la première source 2 et/ou de la deuxième source 3.

Le secteur central 41 peut être apte à focaliser la lumière émise par la première source de lumière 2 ; la première source de lumière 2 est alors disposée au foyer du secteur central 41.

Les secteurs périphériques 42 peuvent être aptes à focaliser la lumière émise par la deuxième source de lumière 3. Plus particulièrement, chaque secteur périphérique 42 peut être configuré pour focaliser la lumière émise par la deuxième source de lumière 3, cette dernière étant disposée au foyer de la pluralité des secteurs périphériques 42.

Comme représentée sur la figure 6, un cache 20, avantageusement unique, peut être disposé sur une partie du pourtour de la première source de lumière 2 pour limiter l'éclairement dudit au moins un secteur périphérique 42 par la première source 2 et l'éclairement du secteur central 41 par la deuxième source 3.

Comme visible sur la figure 6, la première source 2 et la deuxième source 3 peuvent être disposées en vis-à-vis du secteur central 41 du réflecteur 4. Les première et deuxième sources de lumière 2 et 3 peuvent être solidaires d'un élément de support 15, la première source de lumière 2 pouvant être fixée sur une plaque intermédiaire 16 elle-même reliée au support 15.

Les première et deuxième sources de lumière 2 et 3 peuvent être alignées sur l'élément de support 15 selon une direction D sensiblement orthogonale à la direction selon laquelle s'étend le secteur central 41.

Le secteur central 41 peut présenter une forme et des dimensions adaptées pour que la lumière issue de la première source 2 génère une distribution de lumière confinée sous l'axe de projection horizontale H.

En variante, tous les secteurs réfléchissants du réflecteur présentent un même foyer au niveau duquel est disposée la deuxième source de lumière 3. Dès lors, la première source de lumière ne se situe pas au foyer du secteur central. On dit que le réflecteur 4 défocalise la lumière issue de la première source 2. Les première et deuxième sources de lumière 2 et 3 peuvent alors être alignées sur l'élément de support 15 selon la direction D de sorte que la première source soit plus proche d'un bord 9 du secteur central 41 que la deuxième source 3. En d'autres termes, la distance entre la première source 2 et le bord 9 dans la direction D est inférieure à la distance entre la deuxième source 3 et le bord 9 dans la direction D. De la sorte, la lumière issue de la première source 2 génère une distribution de lumière qui peut être confinée sous l'axe de projection horizontal H, tandis que la lumière issue de la deuxième source 3 génère une distribution de lumière plus haute par rapport à l'axe de projection horizontal H.

Pour compenser le fait que, selon cette variante, le secteur central 41 ne focalise pas les rayons de la ou des premières sources 2, il est possible d'adapter sa puissance, notamment par augmentation de la surface réfléchissante du secteur central 41. En variante ou en supplément, il est envisagé que le dispositif d'éclairage comprenne une pièce d'étalement (non représentée) positionnée entre la ou les premières sources 2 et le réflecteur 4, cette pièce étant apte à être traversée par la lumière et à étaler les rayons qui la traversent.

Il est à noter en effet que, lorsque le secteur central 41 ne focalise pas les rayons de la ou des premières sources 2, la distribution de lumière générée par la ou des premières sources 2 peut présenter des zones plus lumineuses que d'autres. Ces zones peuvent être à l'origine d'une dégradation de la fonction de signalisation diurne et d'un éblouissement pour d'éventuels observateurs. Toutefois, la fonction de signalisation diurne selon l'invention étant réalisée via la ou les premières sources de lumière 2, ainsi que via la ou les troisièmes sources de lumière 6, il est avantageusement possible de diminuer significativement la puissance de chaque première source de lumière, par rapport à un dispositif d'éclairage dépourvu de guides de lumière 5. Cette diminution de la puissance de la ou des premières sources 2 peut être d'un facteur égal à 10, voire plus. Dès lors, il est observé que les éventuelles variations spatiales de la distribution lumineuse générée selon la présente invention par la première source 2 sont bien moins gênantes. Cet effet avantageux est d'autant plus appréciable :
- que la distribution lumineuse générée par la ou les premières sources 2 est confinée sous l'axe de projection horizontal H,
- que la distribution lumineuse générée par la ou les troisièmes sources 6 est relativement orientée de façon à être située sur et au-dessus de l'axe de projection horizontal H, et
- que le dispositif d'éclairage comprend une pièce d'étalement telle que susmentionnée.

### Combinaison feu de circulation diurne et feu de route et fonctionnement du dispositif d'éclairage

Le dispositif d'éclairage 1 va maintenant être décrit dans ses différentes configurations d'utilisation.

Pour une utilisation du véhicule automobile pendant la journée, chaque première source de lumière 2 et chaque troisième source de lumière 6 sont allumées, la deuxième source de lumière 3 étant éteinte, ce qui génère une distribution lumineuse de feu de circulation diurne uniquement.

La deuxième source de lumière 3 est disposée au foyer d'au moins les secteurs périphériques 42, de sorte que la lumière émise par la deuxième source 3 est focalisée au moins par les secteurs périphériques 42, ce qui permet de générer une distribution de lumière d'un feu de route pour le véhicule automobile.

Pour une utilisation du véhicule automobile pendant la nuit, deux configurations sont avantageusement prévues.

Une première configuration nocturne concerne une utilisation du véhicule en feu de croisement. Comme indiqué plus haut, et en référence à la figure 1, cette fonction d'éclairage peut être assurée via un agencement adéquat d'au moins une cavité 8 du dispositif d'éclairage 1.

Dans cette configuration, la première source de lumière 2 et chaque troisième source de lumière 6 sont éventuellement allumées, tandis que la deuxième source 3 est éteinte, ce qui génère le cas échéant une distribution lumineuse de feu de circulation diurne, en plus de la distribution lumineuse de feu de croisement. De préférence, la puissance de la première source 2 est réduite par rapport à l'utilisation diurne, par exemple de 20%, afin de ne pas modifier significativement la distribution lumineuse globale générée par le véhicule automobile.

Une deuxième configuration nocturne concerne une utilisation du véhicule en feu de route.

Dans cette configuration, la première source de lumière 2 est éteinte, tandis que la deuxième source 3 et éventuellement la troisième source 6 sont allumées, ce qui génère au moins une distribution lumineuse de feu de route.

On note que, dans chacune des trois configurations décrites, les deux sources 2 et 3 sont en opposition de fonctionnement, l'une étant allumée quand l'autre est éteinte, et vice versa.

On note que dans chacune des trois configurations décrites, la troisième source 6 peut être toujours allumée, ce qui contribue à garantir la définition d'une signature lumineuse distinctive et reconnaissable de nuit comme de jour, signature permettant d'identifier le modèle et/ou la marque du véhicule en toutes circonstances.

On note également que dans chacune des trois configurations décrites, le dispositif d'éclairage est toujours allumé.

### Distribution lumineuse

Chaque première source de lumière 2 est disposée relativement au réflecteur 4, de sorte que la distribution de lumière issue de la ou des premières sources 2 est confinée sous l'axe de projection horizontal H.

Chaque troisième source de lumière 6 est disposée relativement au guide de lumière 5 auquel elle est associée, de sorte que la distribution de lumière issue de la ou des troisièmes sources de lumière s'étend de part et d'autre de l'axe de projection horizontal H.

La figure 2 illustre une distribution lumineuse 100 du dispositif d'éclairage 1 en configuration de feu de signalisation diurne selon des axes de projection H et V, respectivement pour horizontal et vertical.

La distribution lumineuse illustrée sur la figure 2 est sensiblement symétrique par rapport à l'axe de projection vertical V.

Cette distribution de lumière 100 est observée lorsque la lumière émise par ladite au moins une première source 2 est réfléchie par le réflecteur 4 et lorsque la lumière émise par ladite au moins une troisième source 6 est transmise par ledit au moins un guide de lumière 5.

Chaque guide de lumière 5 est agencé, par exemple de l'une des façons décrites plus haut, de sorte que la lumière émise par la ou les troisièmes sources 6 génère une première partie 110 de la distribution de lumière 100 du feu de signalisation diurne. En outre, le réflecteur 4 est agencé de sorte que la lumière émise par la ou les premières sources 2 génère une seconde partie 120 de la distribution de lumière 100 du feu de signalisation diurne. Dans ce cas, il est préféré que les première et seconde parties de la distribution de lumière 100 se recouvrent au plus de façon partielle. Une continuité de la distribution de lumière 100 est ainsi atteinte.

Plus particulièrement, la première partie 110 de la distribution de lumière du feu de signalisation diurne s'étend de part et d'autre de l'axe de projection horizontal H du dispositif d'éclairage 1 et la seconde partie 120 de la distribution de lumière du feu de signalisation diurne est confinée de sorte de s'étendre au-dessous de l'axe de projection horizontal H.

La première partie 110 de la distribution de lumière 100 peut présenter des courbes isophotes 111 resserrées à mesure que la première partie 110 s'étend au-dessous de l'axe de projection horizontal H. Au contraire, la première partie 110 de la distribution de lumière 100 peut présenter des courbes isophotes desserrées à mesure que la première partie 110 s'étend au-dessus de l'axe de projection horizontal H. Ainsi la première partie 110 de la distribution de lumière 100 est plus intense dans sa partie basse que dans sa partie haute, en d'autres termes la partie la plus intense du faisceau est celle située au centre de la courbe isophote centrale sur la figure 2. On évite ainsi éventuellement d'éblouir un observateur tout en remplissant la fonction de signalisation diurne.

Pour obtenir cette première partie 110 de la distribution de lumière 100 avec de telles courbes isophotes 111, on peut combiner une courbure de la face avant 513 du guide de lumière 5 d'un rayon r adapté et un élément de découplage 52 recouvrant une portion de la face arrière 512 du guide de lumière 5, cette portion étant comprise dans une demi-hauteur basse de la face arrière 512.

Plus particulièrement, la première partie 110 de la distribution de lumière 100 peut s'étendre, sur l'axe de projection vertical V, d'environ 6° au-dessous de l'axe de projection horizontal H jusqu'à environ 20° au-dessus de l'axe de projection horizontal. De préférence, la première partie 110 de la distribution de lumière 100 s'étend d'environ 3° au-dessous de l'axe de projection horizontal jusqu'à environ 15° au-dessus de l'axe de projection horizontal H.

Conséquemment, la deuxième partie 120 de la distribution de lumière 100 commence à s'étendre sous l'axe de projection horizontal depuis un angle préférentiellement inférieur à 6° au-dessous de l'axe de projection horizontal H.

La contribution lumineuse 110 au feu de circulation diurne liée à la transmission par le guide 5 de la lumière émise par la troisième source 6 est préférentiellement plus importante que la contribution lumineuse 120 au feu de circulation diurne liée à la réflexion de la lumière émise par la première source 2 et réfléchie par le réflecteur 4.

Grâce au dispositif d'éclairage selon la présente invention, il est possible de combiner, dans un même dispositif d'éclairage, le feu de circulation diurne et le feu de route, malgré des distributions lumineuses très différentes.

Il est ainsi rendu possible d'obtenir une signature lumineuse spécifique pour le véhicule automobile, qui est avantageusement en forme de C, si deux guides de lumière 5 sont disposés respectivement au-dessus et au-dessous du dispositif d'éclairage 1, comme cela est illustré sur la figure 1. Comme discuté plus haut, d'autres formes de signature sont également possibles à atteindre grâce au dispositif d'éclairage selon la présente invention. Par exemple, le guide de lumière 5a, illustré sur la figure 1, est conservé tandis que le guide de lumière 5b est retiré et qu'un troisième guide de lumière (non représenté) est ajouté qui passe par exemple entre la cavité du réflecteur 4 et la cavité 8 du feu de croisement : on obtient alors une signature en forme de T.

L'ajout des guides de lumière du dispositif d'éclairage selon la présente invention est avantageusement réalisable sur des dispositifs d'éclairage selon l'art antérieur. En outre, cette adaptation des dispositifs d'éclairage selon l'art antérieur est peu coûteuse. Il est ainsi avantageusement possible d'adapter une version antérieure d'un dispositif d'éclairage, constituant par exemple une version d'entrée de gamme, pour réaliser un dispositif d'éclairage selon l'invention, qui constituerait une version améliorée, voire 'haut de gamme'.

Il pourrait être envisagé que la fonction de signalisation diurne ne soit remplie que par la contribution de la lumière transmise par les guides de lumière. Cependant, dans ce cas, la capacité de distinction et de reconnaissance de la signature lumineuse du dispositif d'éclairage serait insuffisante.

C'est donc avantageusement que la présente invention propose de combiner la contribution de la ou les premières sources de lumière 2 et la contribution de la ou les troisièmes sources de lumière pour réaliser la fonction de signalisation diurne. On note toutefois que ces contributions sont réparties spécialement pour que seule la contribution de la ou les troisièmes sources de lumière semble contribuer à la réalisation de la fonction de signalisation diurne pour un observateur. Il est à noter qu'un observateur, qu'il soit piéton ou conducteur d'un autre véhicule automobile, observe généralement le dispositif d'éclairage selon la présente invention depuis un point situé au-dessus de l'axe de projection horizontal H.

Le dispositif d'éclairage offre la possibilité de répartir les contributions de chacune des première et troisième sources selon différentes configurations spatiales. Plus particulièrement, il est avantageusement possible de créer une distribution lumineuse 100 dont la seconde partie 120 apparaît relativement effacée par rapport à la première partie 110. La seconde partie 120 de la distribution lumineuse peut ne pas apparaître dans la majorité des directions d'observations et seule la première partie 110 de la distribution lumineuse apparaît dans la majorité des directions d'observations.

Chaque première source de lumière 2 et chaque troisième source de lumière 6 sont préférentiellement des diodes électroluminescentes. Lorsque le dispositif d'éclairage comprend deux guides de lumière 5 associés chacun à une diode électroluminescente 6 et que deux diodes électroluminescentes 2 sont agencées conjointement avec le réflecteur 4, le dispositif d'éclairage comporte quatre diodes électroluminescentes, chacune pouvant avoir une puissance égale à la puissance des autres, par exemple une puissance égale à 100 lumen.

Selon un mode de réalisation complémentaire ou alternatif, les projecteurs gauche et droit d'un véhicule sont des images miroir l'un de l'autre.

## Revendications

1. Dispositif d'éclairage (1) pour véhicule automobile comprenant au moins une première source (2) et au moins une deuxième source (3) de lumière agencées conjointement avec un réflecteur (4),
le dispositif d'éclairage comprenant en outre au moins une troisième source (6) de lumière agencée conjointement avec au moins un guide de lumière (5), de sorte que le dispositif d'éclairage est apte à générer :
- une distribution de lumière (100) d'un feu de signalisation diurne, lorsque la lumière émise par ladite au moins une première source est réfléchie par le réflecteur et lorsque la lumière émise par ladite au moins une troisième source est transmise par ledit au moins un guide de lumière, et
- une distribution de lumière d'un feu de route, lorsque la lumière émise par ladite au moins une deuxième source est réfléchie par le réflecteur.

2. Dispositif d'éclairage selon la revendication 1, dans lequel ledit au moins un guide de lumière (5) est agencé de sorte que la lumière émise par ladite au moins une troisième source (6) génère une première partie (110) de la distribution de lumière (100) du feu de signalisation diurne, et dans lequel le réflecteur (4) est agencé de sorte que la lumière émise par ladite au moins une première source (2) génère une seconde partie (120) de la distribution de lumière (100) du feu de signalisation diurne, les première et seconde parties de la distribution de lumière (100) se recouvrant au plus de façon partielle.

3. Dispositif d'éclairage selon la revendication 2, dans lequel ladite première partie (110) de la distribution de lumière du feu de signalisation diurne s'étend de part et d'autre d'un axe de projection horizontal (H) du dispositif d'éclairage (1) et ladite seconde partie (120) de la distribution de lumière du feu de signalisation diurne s'étend au-dessous de l'axe de projection horizontal (H).

4. Dispositif d'éclairage selon la revendication 2 ou la revendication 3, dans lequel ladite première partie (110) de la distribution de lumière du feu de signalisation diurne présente des courbes isophotes (111) resserrées à mesure que ladite première partie s'étend au-dessous de l'axe de projection horizontal (H).

5. Dispositif d'éclairage selon l'une quelconque des revendications 2 à 4, dans lequel ladite première partie (110) de la distribution de lumière du feu de signalisation diurne s'étend, sur un axe de projection vertical (V), d'environ 6° au-dessous de l'axe de projection horizontal (H) jusqu'à environ 20° au-dessus de l'axe de projection horizontal, préférentiellement d'environ 3° au-dessous de l'axe de projection horizontal jusqu'à environ 15° au-dessus de l'axe de projection horizontal.

6. Dispositif d'éclairage selon l'une quelconque des revendications 1 à 5, dans lequel la contribution lumineuse au feu de circulation diurne liée à la transmission par le guide (5) de la lumière émise par la troisième source (6) est plus importante que la contribution lumineuse au feu de circulation diurne liée à la réflexion de la lumière émise par la première source (2) et réfléchie par le réflecteur (4).

7. Dispositif d'éclairage selon l'une quelconque des revendications 1 à 6, dans lequel ledit au moins un guide de lumière (5) s'étend principalement selon un axe longitudinal (y) sensiblement parallèle à un axe de projection horizontal (H) du dispositif d'éclairage (1).

8. Dispositif d'éclairage selon l'une quelconque des revendications 1 à 7, dans lequel ledit au moins un guide de lumière (5) s'étend, au-delà du réflecteur de lumière (4), sensiblement sur toute une longueur du dispositif d'éclairage (1).

9. Dispositif d'éclairage selon l'une quelconque des revendications 1 à 8, dans lequel chaque guide de lumière (5) présente une face dite avant (513), d'où la lumière émise par ladite au moins une troisième source de lumière (6) est transmise hors du guide de lumière (5), et la face avant de chaque guide de lumière (5) présente une surface comprise entre 14 et 26 cm² et/ou une courbure d'un rayon déterminé pour contrôler une déviation de la lumière transmise hors du guide de lumière (5).

10. Dispositif d'éclairage selon l'une quelconque des revendications 1 à 9, dans lequel ledit au moins un guide de lumière (5) comprend :
- une partie de corps (51) constituée d'au moins un matériau transparent et s'étendant principalement selon un axe longitudinal (y), la partie de corps comprenant au moins une face transversale (511) d'extrémité en regard de laquelle est agencée ladite au moins une troisième source de lumière (6), de sorte que la lumière émise par ladite au moins une troisième source soit reçue et se propage dans la partie de corps au moins par réflexions totales sur des faces longitudinales de la partie de corps, et
- un élément de découplage (52) constitué d'au moins un matériau réfléchissant et recouvrant partiellement une face dite arrière (512) de ladite partie de corps (51), la face arrière (512) étant opposée à une face dite avant (513) de la partie de corps (51) par laquelle la lumière se propageant dans la partie de corps est émise hors dudit au moins un guide de lumière (5) après réflexion sur l'élément de découplage.

11. Dispositif d'éclairage selon la revendication 10, dans lequel l'élément de découplage (52) recouvre une portion de la face arrière (512) de la partie de corps (51), cette portion ayant une largeur (l) inférieure à une largeur (L) de la face arrière (512).

12. Dispositif d'éclairage selon la revendication 10, dans lequel l'élément de découplage (52) recouvre une portion de la face arrière (512) de la partie de corps (51), cette portion étant essentiellement comprise dans une demi-hauteur de la face arrière (512).

13. Dispositif d'éclairage selon la revendication 10, dans lequel ledit au moins un guide de lumière (5) ou un premier guide de lumière (5a) est disposé au-dessus du réflecteur (4), et l'élément de découplage (52) recouvre une portion de la face arrière (512) de la partie de corps (51), cette portion étant essentiellement comprise dans la demi-hauteur de la face arrière (512) la plus proche du réflecteur (4).

14. Dispositif d'éclairage selon la revendication 10 ou la revendication 13, dans lequel ledit au moins un guide de lumière (5) ou un deuxième guide de lumière (5b) est disposé au-dessous du réflecteur (4), et l'élément de découplage (52) recouvre une portion de la face arrière (512) de la partie de corps (51), cette portion étant essentiellement comprise dans la demi-hauteur de la face arrière (512) la plus éloignée du réflecteur (4).

15. Dispositif d'éclairage selon l'une quelconque des revendications 1 à 14, dans lequel le réflecteur (4) comprend un secteur central (41) apte à focaliser la lumière émise par ladite au moins une première source de lumière (2) et au moins un secteur périphérique (42) apte à focaliser la lumière émise par ladite au moins une deuxième source de lumière (3).

16. Dispositif d'éclairage selon l'une quelconque des revendications 1 à 14, dans lequel le réflecteur (4) est configuré pour focaliser la lumière émise par ladite au moins une deuxième source de lumière (3) et pour défocaliser la lumière émise par ladite au moins une première source de lumière (2).

## Patentansprüche

1. Beleuchtungsvorrichtung (1) für ein Kraftfahrzeug, die mindestens eine erste Lichtquelle (2) und mindestens eine zweite Lichtquelle (3) beinhaltet, die zusammen mit einem Reflektor (4) eingerichtet sind,
wobei die Beleuchtungsvorrichtung ferner mindestens eine dritte Lichtquelle (6) beinhaltet, die zusammen mit mindestens einem Lichtleiter (5) eingerichtet ist, sodass die Beleuchtungsvorrichtung dazu fähig ist, Folgendes zu erzeugen:
- eine Lichtverteilung (100) eines Tagfahrlichts, wenn das durch die mindestens eine erste Quelle emittierte Licht durch den Reflektor reflektiert wird und wenn das durch die mindestens eine dritte Quelle emittierte Licht durch den mindestens einen Lichtleiter übertragen wird, und
- eine Lichtverteilung eines Fernlichts, wenn das durch die mindestens eine zweite Quelle emittierte Licht durch den Reflektor reflektiert wird.

2. Beleuchtungsvorrichtung nach Anspruch 1, wobei der mindestens eine Lichtleiter (5) so eingerichtet ist, dass das durch die mindestens eine dritte Quelle (6) emittierte Licht einen ersten Teil (110) der Lichtverteilung (100) des Tagfahrlichts erzeugt, und wobei der Reflektor (4) so eingerichtet ist, dass das durch die mindestens eine erste Quelle (2) emittierte Licht einen zweiten Teil (120) der Lichtverteilung (100) des Tagfahrlichts erzeugt, wobei sich der erste und der zweite Teil der Lichtverteilung (100) höchstens teilweise überlappen.

3. Beleuchtungsvorrichtung nach Anspruch 2, wobei sich der erste Teil (110) der Lichtverteilung des Tagfahrlichts beiderseits einer horizontalen Projektionsachse (H) der Beleuchtungsvorrichtung (1) erstreckt und sich der zweite Teil (120) der Lichtverteilung des Tagfahrlichts unterhalb der horizontalen Projektionsachse (H) erstreckt.

4. Beleuchtungsvorrichtung nach Anspruch 2 oder Anspruch 3, wobei der erste Teil (110) der Lichtverteilung des Tagfahrlichts Isophoten (111) aufweist, die sich umso mehr verengen, je weiter sich der erste Teil unterhalb der horizontalen Projektionsachse (H) erstreckt.

5. Beleuchtungsvorrichtung nach einem beliebigen der Ansprüche 2 bis 4, wobei sich der erste Teil (110) der Lichtverteilung des Tagfahrlichts gemäß einer vertikalen Projektionsachse (V) von ungefähr 6° unterhalb der horizontalen Projektionsachse (H) bis ungefähr 20° oberhalb der horizontalen Projektionsachse, vorzugsweise von ungefähr 3° unterhalb der horizontalen Projektionsachse bis ungefähr 15° oberhalb der horizontalen Projektionsachse, erstreckt.

6. Beleuchtungsvorrichtung nach einem beliebigen der Ansprüche 1 bis 5, wobei der Lichtbeitrag zu dem Tagfahrlicht, der mit der Übertragung des durch die dritte Quelle (6) emittierten Lichts durch den Leiter (5) verbunden ist, größer ist als der Lichtbeitrag zu dem Tagfahrlicht, der mit der Reflexion des durch die erste Quelle (2) emittierten und durch den Reflektor (4) reflektieren Lichts verbunden ist.

7. Beleuchtungsvorrichtung nach einem beliebigen der Ansprüche 1 bis 6, wobei sich der mindestens eine Lichtleiter (5) im Wesentlichen gemäß einer Längsachse (y) erstreckt, die zu einer horizontalen Projektionsachse (H) der Beleuchtungsvorrichtung (1) im Wesentlichen parallel ist.

8. Beleuchtungsvorrichtung nach einem beliebigen der Ansprüche 1 bis 7, wobei sich der mindestens eine Lichtleiter (5) jenseits des Lichtreflektors (4) im Wesentlichen über eine gesamte Länge der Beleuchtungsvorrichtung (1) erstreckt.

9. Beleuchtungsvorrichtung nach einem beliebigen der Ansprüche 1 bis 8, wobei jeder Lichtleiter (5) eine sogenannte Vorderseite (513) aufweist, an der das durch die mindestens eine dritte Lichtquelle (6) emittierte Licht nach außerhalb des Lichtleiters (5) übertragen wird, und die Vorderseite jedes Lichtleiters (5) eine Oberfläche zwischen 14 und 26 cm² und/oder eine Krümmung mit einem bestimmten Radius aufweist, um eine Ablenkung des Lichts, das nach außerhalb des Lichtleiters (5) übertragen wird, zu steuern.

10. Beleuchtungsvorrichtung nach einem beliebigen der Ansprüche 1 bis 9, wobei der mindestens eine Lichtleiter (5) Folgendes beinhaltet:
- einen Körperteil (51), der aus mindestens einem transparenten Material besteht und sich im Wesentlichen gemäß einer Längsachse (y) erstreckt, wobei der Körperteil mindestens eine Stirnendfläche (511) beinhaltet, gegenüber der die mindestens eine dritte Lichtquelle (6) eingerichtet ist, sodass das durch die mindestens eine dritte Quelle emittierte Licht in dem Körperteil empfangen wird und sich mindestens durch Totalreflexion an Längsseiten des Körperteils ausbreitet, und
- ein Entkopplungselement (52), das aus mindestens einem reflektierenden Material besteht und eine sogenannte Rückseite (512) des Körperteils (51) teilweise bedeckt, wobei die Rückseite (512) zu einer sogenannten Vorderseite (513) des Körperteils (51) entgegengesetzt ist, durch die das Licht, das sich in dem Körperteil ausbreitet, nach Reflexion an dem Entkopplungselement aus dem mindestens einen Lichtleiter (5) emittiert wird.

11. Beleuchtungsvorrichtung nach Anspruch 10, wobei das Entkopplungselement (52) einen Abschnitt der Rückseite (512) des Körperteils (51) abdeckt, wobei dieser Abschnitt eine Breite (1) aufweist, die kleiner als eine Breite (L) der Rückseite (512) ist.

12. Beleuchtungsvorrichtung nach Anspruch 10, wobei das Entkopplungselement (52) einen Abschnitt der Rückseite (512) des Körperteils (51) abdeckt, wobei dieser Abschnitt im Wesentlichen in einer halben Höhe der Rückseite (512) enthalten ist.

13. Beleuchtungsvorrichtung nach Anspruch 10, wobei der mindestens eine Lichtleiter (5) oder ein erster Lichtleiter (5a) oberhalb des Reflektors (4) angeordnet ist und das Entkopplungselement (52) einen Abschnitt der Rückseite (512) des Körperteils (51) abdeckt, wobei dieser Abschnitt im Wesentlichen in der halben Höhe der Rückseite (512), die dem Reflektor (4) am nächsten ist, enthalten ist.

14. Beleuchtungsvorrichtung nach Anspruch 10 oder Anspruch 13, wobei der mindestens eine Lichtleiter (5) oder ein zweiter Lichtleiter (5b) unterhalb des Reflektors (4) angeordnet ist und das Entkopplungselement (52) einen Abschnitt der Rückseite (512) des Körperteils (51) abdeckt, wobei dieser Abschnitt im Wesentlichen in der halben Höhe der Rückseite (512), die von dem Reflektor (4) am weitesten entfernt ist, enthalten ist.

15. Beleuchtungsvorrichtung nach einem beliebigen der Ansprüche 1 bis 14, wobei der Reflektor (4) einen mittigen Bereich (41), der dazu fähig ist, das durch die mindestens eine erste Lichtquelle (2) emittierte Licht zu fokussieren, und mindestens einen Außenbereich (42), der dazu fähig ist, das durch die mindestens eine zweite Lichtquelle (3) emittierte Licht zu fokussieren, beinhaltet.

16. Beleuchtungsvorrichtung nach einem beliebigen der Ansprüche 1 bis 14, wobei der Reflektor (4) dazu konfiguriert ist, das durch die mindestens eine zweite Lichtquelle (3) emittierte Licht zu fokussieren und das durch die mindestens eine erste Lichtquelle (2) emittierte Licht zu defokussieren.

## Claims

1. Lighting device (1) for a motor vehicle comprising at least one first source (2) and at least one second source (3) of light which are arranged together with a reflector (4),
the lighting device further comprising at least one third light source (6) arranged together with at least one light guide (5) so that the lighting device is able to generate:
- a light distribution (100) of a daytime running light, when the light emitted by said at least one first source is reflected by the reflector and when the light emitted by said at least one third source is transmitted by said at least one light guide, and
- a light distribution of a high-beam headlight, when the light emitted by said at least one second source is reflected by the reflector.

2. Lighting device according to Claim 1, wherein said at least one light guide (5) is arranged in such a way that the light emitted by said at least one third source (6) generates a first part (110) of the light distribution (100) of the daytime running light and wherein the reflector (4) is arranged in such a way that the light emitted by said at least one first source (2) generates a second part (120) of the light distribution (100) of the daytime running light, the first and second parts of the light distribution (100) overlapping at most partially.

3. Lighting device according to Claim 2, wherein said first part (110) of the light distribution of the daytime running light extends on each side of a horizontal projection axis (H) of the lighting device (1) and said second part (120) of the light distribution of the daytime running light extends below the horizontal projection axis (H).

4. Lighting device according to Claim 2 or Claim 3, wherein said first part (110) of the light distribution of the daytime running light has isophot curves (111) that become increasingly tightly spaced the further said first part extends below the horizontal projection axis (H).

5. Lighting device according to any one of Claims 2 to 4, wherein said first part (110) of the light distribution of the daytime running light extends, on a vertical projection axis (V), from approximately 6º below the horizontal projection axis (H) up to approximately 20º above the horizontal projection axis, preferably from approximately 3º below the horizontal projection axis up to approximately 15º above the horizontal projection axis.

6. Lighting device according to any one of Claims 1 to 5, wherein the contribution of light to the daytime running light that is associated with the transmission via the guide (5) of the light emitted by the third source (6) is greater than the contribution of light to the daytime running light that is associated with the reflection of the light emitted by the first source (2) and reflected by the reflector (4) .

7. Lighting device according to any one of Claims 1 to 6, wherein said at least one light guide (5) extends mainly along a longitudinal axis (y) substantially parallel to a horizontal projection axis (H) of the lighting device (1).

8. Lighting device according to any one of Claims 1 to 7, wherein said at least one light guide (5) extends, beyond the light reflector (4), over substantially an entire length of the lighting device (1).

9. Lighting device according to any one of Claims 1 to 8, wherein each light guide (5) has a face known as the front face (513) from where the light emitted by said at least one third source of light (6) is transmitted out of the light guide (5), and the front face of each light guide (5) has a surface area of between 14 and 26 cm² and/or a curvature of a radius that is determined in such a way as to control a deviation of the light transmitted out of the light guide (5).

10. Lighting device according to any one of Claims 1 to 9, wherein said at least one light guide (5) comprises:
- a body part (51) made from at least one transparent material and extending mainly along a longitudinal axis (y), the body part comprising at least one transverse end face (511) facing which said at least one third light source (6) is arranged so that the light emitted by said at least one third source is received and travels in the body part at least through total internal reflection off the longitudinal faces of the body part, and
- a decoupling element (52) made of at least one reflective material and partially covering a face, referred to as the rear face (512), of said body part (51), the rear face (512) being opposite to a face referred to as the front face (513) of the body part (51) via which the light traveling along the body part is emitted out of said at least one light guide (5) after reflecting off the decoupling element.

11. Lighting device according to Claim 10, wherein the decoupling element (52) covers a portion of the rear face (512) of the body part (51), this portion having a width (1) less than a width (L) of the rear face (512).

12. Lighting device according to Claim 10, wherein the decoupling element (52) covers a portion of the rear face (512) of the body part (51), this portion being essentially comprises in half the height of the rear face (512).

13. Lighting device according to Claim 10, wherein said at least one light guide (5) or a first light guide (5a) is arranged above the reflector (4), and the decoupling element (52) covers a portion of the rear face (512) of the body part (51), this portion being essentially comprised within the half height of the rear face (512) closest to the reflector (4).

14. Lighting device according to Claim 10 or Claim 13, wherein said at least one light guide (5) or a second light guide (5b) is arranged below the reflector (4), and the decoupling element (52) covers a portion of the rear face (512) of the body part (51), this portion being essentially comprised within the half height of the rear face (512) furthest from the reflector (4).

15. Lighting device according to any one of Claims 1 to 14, wherein the reflector (4) comprises a central sector (41) able to focus the light emitted by said at least one first light source (2) and at least one peripheral sector (42) able to focus the light emitted by said at least one second light source (3) .

16. Lighting device according to any one of Claims 1 to 14, wherein the reflector (4) is configured to focus the light emitted by said at least one second light source (3) and to defocus the light emitted by said at least one first light source (2).
